# FASCICULE DE BREVET EUROPEEN

(11) **EP 3 770 413 B1**
(45) Date de publication et mention de la délivrance du brevet: **21.12.2022**
(21) Numéro de dépôt: 20181293.0
(22) Date de dépôt: 20.06.2020
(51) Int. Cl.: F02F 1/24, G01K 1/14

(54) **CHAMBRE DE COMBUSTION D'UN MOTEUR THERMIQUE INTEGRANT UNE SONDE DE TEMPERATURE ET MOTEUR THERMIQUE ASSOCIE**
BRENNKAMMER EINES WÄRMEKRAFTMOTORS, DIE EINEN TEMPERATURSENSOR ENTHÄLT, UND ENTSPRECHENDER WÄRMEKRAFTMOTOR
COMBUSTION CHAMBER OF A HEAT ENGINE INCLUDING A TEMPERATURE SENSOR AND ASSOCIATED HEAT ENGINE

(30) Priorité: 23.07.2019 FR 1908313
(43) Date de publication de la demande: 27.01.2021
(73) Titulaire: M.C. Aeronautique, 26600 Tain L'Hermitage (FR)
(72) Inventeur: JEAN-FULCRAND, Pascal, 07210 BAIX (FR)
(74) Mandataire: Cabinet Laurent & Charras

(56) Documents cités:
- EP-A1- 2 703 622
- WO-A1-2005/070593
- JP-U- S5 668 132
- US-A1- 2014 305 393

## Description

### Domaine technique

L'invention concerne une chambre de combustion d'un moteur thermique intégrant une plusieurs sondes de température, disposées à l'intérieur de la chambre de combustion, de sorte à mesurer la température de combustion lors des explosions intervenantes dans le cycle de fonctionnement d'un moteur thermique. L'invention concerne également un moteur intégrant au moins une telle chambre de combustion et un système d'équilibrage basé sur la mesure de température réalisée dans la chambre de combustion.

L'invention peut être appliquée à tous les engins ou véhicules thermiques. L'invention trouve une application particulièrement avantageuse pour dépasser les limites de fonctionnement habituellement admises d'un moteur thermique et/ou améliorer son rendement et réduire sa consommation.

### Arrière-plan technologique

Un moteur thermique comporte classiquement une ou plusieurs chambres de combustion. Chaque chambre de combustion comporte un piston mobile en translation dans un cylindre fermé par une culasse. Le cylindre présente une ouverture d'arrivée d'air connectée à un injecteur de carburant permettant d'injecter, au niveau de la culasse, à la fois l'air et le carburant nécessaires à l'explosion. À l'opposé de cette ouverture d'arrivée d'air, le cylindre est connecté à une sortie d'échappement des gaz de combustion. La culasse intègre également une ou plusieurs bougies permettant d'allumer l'explosion au moyen d'une étincelle lorsque l'air et le carburant sont situé dans le volume entre la culasse et le piston.

Cette explosion entraîne un déplacement en translation du piston dans le cylindre, à l'opposé de la culasse. Généralement, le piston déplace un vilebrequin qui entraîne un axe en rotation.

La vitesse de rotation de cet axe est classiquement mesurée afin de connaître les performances du moteur. En effet, un moteur thermique est classiquement commandé en fonction d'une vitesse recherchée sur l'axe du moteur.

Pour ce faire, un système de commande classique d'un moteur thermique intègre un tableau prédictif reliant le taux d'ouverture de l'injecteur de carburant avec le nombre de tours par minute obtenu expérimentalement sur l'axe du moteur. Cependant, cette relation entre les tours par minute observés sur l'axe du moteur et le pourcentage d'ouverture de l'injecteur n'est pas particulièrement fiable, car il existe de nombreux cas dans lesquels l'explosion est plus ou moins efficace en fonction de paramètres difficilement mesurables, tels que la température de la culasse ou la pureté du carburant. En outre, il arrive souvent que tout le carburant injecté dans le cylindre ne soit pas correctement consommé lors de l'explosion.

Pour améliorer la commande d'un moteur thermique, il est classiquement utilisé des sondes « lambda » disposées sur la sortie d'échappement afin de mesurer le taux d'oxygène ou la température des gaz d'échappement. En analysant les gaz présents au niveau de la sortie d'échappement, il est possible d'estimer la qualité des explosions qui ont eu lieu dans la chambre de combustion et d'anticiper une dérive du fonctionnement du moteur thermique, c'est-à-dire une dérive dans la qualité des explosions. Par exemple, si les gaz d'échappement contiennent une quantité d'oxygène faible, il est possible de déduire que la moyenne des combustions précédentes était trop riche en carburant, ce qui peut indiquer un mauvais dosage de l'injecteur.

Certains systèmes de commande intègrent cette information pour pondérer la relation entre le pourcentage d'ouverture de l'injecteur de carburant et le nombre de tours par minute sur l'axe du moteur.

Cette information est cependant très limitée car la mesure du taux d'oxygène des gaz d'échappement est un processus qui nécessite une moyenne sur une à deux secondes pour obtenir des résultats cohérents. Il n'est pas possible de traiter cette information en temps réel pour gérer chaque explosion. Ainsi, cette mesure des gaz d'échappement par des sondes « lambda » permet uniquement de donner une indication sur un temps long comparativement à la fréquence des explosions.

Pour conclure, avec les moteurs thermiques connus, il n'est pas possible de connaître précisément l'état de l'explosion réalisée dans la chambre de combustion.

Certaines sociétés se sont lancées dans le développement de capteurs de température pour mesurer la température dans la chambre de combustion. Ces recherches ont, par exemple, données lieu aux dépôts des brevets FR 2 933 187, FR 2 916 847 ou FR 2 908 464.

Cependant, ces inventions n'ont pas permis d'aboutir à des réalisations pratiques, car il est techniquement difficile d'intégrer un capteur de température dans la chambre de combustion en raison de la température de l'explosion obtenue dans un moteur au kérosène, à l'essence ou au gasoil. En effet, pour ces types de moteurs thermiques, l'explosion atteint une température d'environ 3000°C dans la chambre de combustion avec une pression générée comprise entre 60 et 80 bars.

Au sens de l'invention, l'explosion correspond au point à partir duquel l'étincelle permet une réaction chimique exothermique entre les molécules d'air et les molécules de carburant. Cette réaction se déplace ensuite de proche en proche dans la chambre de combustion.

Les capteurs de température actuels ne sont pas capables de mesurer des températures de 3000° avec des pressions comprises entre 60 et 80 bars sans risquer de se détériorer rapidement.

Il serait possible de protéger des sondes de température par les dispositifs de protection analogues à ceux utilisés pour les bougies disposées dans les chambres de combustion. Cependant, la résistance thermique des matériaux serait trop importante et de tels capteurs de température ne seraient pas capables de mesurer la température à l'intérieur de la chambre de combustion avec une précision plus importante que celle des sondes « lambda ».

Le document JP S56 68132 U décrit une culasse ayant un capteur de température en contact avec une chambre de mesure reliée à la chambre de combustion par un canal.

Le problème technique de l'invention et donc d'obtenir, avec une plus grande fiabilité et une plus grande réactivité, la température à l'intérieur de la chambre de combustion lors d'une explosion.

### Exposé de l'invention

L'invention propose de répondre à ce problème technique en ménageant une chambre de mesures dans la culasse de la chambre de combustion de sorte que les gaz issus de l'explosion puissent se propager dans cette chambre de mesure par un canal. Les propriétés géométriques du canal et de la chambre de mesure sont déterminées pour réaliser une baisse de la température entre la température de l'explosion et la température présente autour d'un capteur disposé dans la chambre de mesures.

En outre, pour garantir la fiabilité de la prise de mesures par le capteur sur un temps très court analogue au temps d'une explosion, il est nécessaire que le capteur présente un maximum de surface de contact avec les gaz issus de l'explosion.

À cet effet, selon un premier aspect, l'invention concerne une chambre de combustion d'un moteur thermique comportant :
- un cylindre dans lequel un piston est mobile en translation ou en rotation ;
- une culasse disposée à une extrémité dudit cylindre ; une chambre d'explosion étant formée entre ledit piston et ladite culasse ; et
- un capteur de température de ladite chambre de combustion.

L'invention se caractérise en ce que ladite culasse comporte une chambre de mesure reliée à ladite chambre d'explosion par un canal dont une section inférieure présente une dimension inférieure à une section supérieure de ladite chambre de mesure de sorte à former un épaulement entre ledit canal et ladite chambre de mesures ; ladite chambre de mesure comportant un fond, opposé audit canal, sur lequel est fixé ledit capteur de température de sorte qu'une sonde dudit capteur de température s'étende dans ladite chambre de mesure ; ladite chambre de mesure présentant une paroi interne dont la surface est comprise entre 1.3 et 2 fois la surface de ladite sonde dans ladite chambre de mesure de sorte à former un volume libre tout autour de ladite sonde dans ladite chambre de mesure.

L'invention permet, ainsi, de mesurer efficacement chaque explosion réalisée dans une chambre de combustion d'un moteur thermique. En outre, en raison de la surface de contact importante du capteur avec l'explosion, il est possible d'obtenir une mesure directe de la température de chaque explosion et de commander le pourcentage d'ouverture de l'injecteur de carburant, non plus avec le nombre de tours par minute obtenu expérimentalement sur l'axe du moteur, mais directement avec la température d'explosion mesurée.

Cette nouvelle possibilité de commande d'un moteur thermique permet de dépasser les limites constatées expérimentalement d'un moteur et, ainsi, d'augmenter le rendement et de réduire la consommation.

Pour obtenir ces avantages particulièrement importants, le capteur de température doit être efficace. Cette efficacité est obtenue par la coopération du positionnement du capteur, et des géométries du canal et de la chambre de mesures. En effet, la coopération du canal et de l'épaulement formé au-dessus du capteur entraine une très grande réduction de la température subie par le capteur de température.

La culasse étant refroidie, au moins passivement, le passage de l'explosion dans le canal permet une première dissipation de la chaleur. La section supérieure de la chambre de mesures étant supérieure à la section inférieure du canal, l'explosion qui est passée à travers le canal avec un volume prédéfini se détend au niveau de l'épaulement ce qui réduit également la température. De préférence, ladite sonde et ledit canal étant cylindriques, les dimensions du canal sont déterminées de sorte que ledit canal présente : un diamètre compris entre 0.65 et 0.75 fois le diamètre de ladite sonde ; et une longueur comprise entre 0.95 et 1.05 fois le diamètre dudit canal. En outre, ledit épaulement peut présenter une forme conique avec un angle, formé à la base du cône, compris entre 80 et 100 degrés.

Le capteur n'est pas directement disposé au niveau du canal mais il est fixé au fond de la chambre de mesures de sorte que l'explosion vienne lécher le capteur. Le fait que l'explosion entoure le capteur impose à l'explosion de venir sur les parois internes de la chambre de mesures, ce qui permet un refroidissement très efficace par conduction de l'explosion dans la culasse. De préférence, ladite surface de ladite paroi interne est préférentiellement comprise entre 1.5 et 1.6 fois ladite surface de ladite sonde dans ladite chambre de mesure. De préférence, ladite sonde et ledit canal étant cylindriques, les dimensions de la chambre de mesure sont déterminées de sorte que ladite chambre de mesure présente un diamètre compris entre 1.35 et 1.45 fois le diamètre de ladite sonde.

Avec la coopération de toutes ces techniques de refroidissement distinctes, le capteur de température permet d'obtenir une mesure efficace, autour de 1000°C, bien que l'explosion soit de 3000°C dans la chambre d'explosion.

Au lieu d'utiliser un capteur « lambda » qui permet de réaliser des moyennes secondaires pour obtenir une image vague de la réaction présente dans une chambre de combustion, l'invention permet ainsi d'obtenir une mesure particulièrement fiable de l'explosion et le pourcentage d'ouverture des gaz peut donc être corrélé directement à la température de l'explosion au lieu d'être corrélé à la vitesse de rotation de l'axe du moteur.

Ce changement de nature dans la mesure des paramètres d'un moteur thermique permet d'améliorer grandement le rendement du moteur et de s'affranchir des estimations nécessaires aux procédés d'asservissement connus.

Pour un exemple chiffré, l'invention a permis d'améliorer la puissance rapportée à la cylindrée d'un moteur thermique de 80 chevaux par litre de cylindrée à 200 chevaux par litre de cylindrée, car les limites de fonctionnement du moteur ont pu être dépassées sans risque car les caractéristiques de chaque explosion sont maîtrisées et mesurées par le capteur de température.

Selon un mode de réalisation, ladite culasse intègre un évidement interne destiné à la circulation d'un liquide de refroidissement. Ce mode de réalisation permet d'améliorer les capacités de refroidissement de la culasse dans le canal et au niveau des parois internes de la chambre de mesures et ainsi d'obtenir un gradient de température entre la chambre d'explosion et le capteur.

Selon un mode de réalisation, ledit capteur de température intègre trois thermocouples juxtaposés. L'utilisation de trois thermocouples permet une redondance importante des informations de mesures. Ce mode de réalisation garantit ainsi la fiabilité des mesures obtenues. Les mesures de ces trois thermocouples peuvent être moyennées lors de l'exploitation. En outre, une mesure divergente peut être détectée et isolée pour révéler un défaut d'un des thermocouples.

De préférence, ledit capteur de température est recouvert d'une chemise en Inconel^{®}. L'Inconel^{®} désigne un ensemble de super-alliages à base de nickel alliés avec du chrome et du fer.

Par exemple, l'Inconel^{®} 625 présente la composition NiCr22Mo9Nb et l'Inconel^{®} 725 présente la composition NiCr19Fe19Nb5Mo3. L'utilisation de ces super-alliages très spécifiques permet de réduire la température subie par les thermocouples et de protéger les thermocouples en cas de température trop importante dans la chambre de mesures.

De préférence, lesdits thermocouples sont noyés dans un matériau céramique. Ce mode de réalisation permet également de réduire la température subie par les thermocouples.

Selon un mode de réalisation, ledit canal présente une section inférieure qui est inférieure à une section supérieure dudit capteur.

Ce mode de réalisation permet d'éviter qu'en cas de rupture de la sonde dans la chambre de mesures, celle-ci puisse se déplacer dans la chambre d'explosion et détériorer gravement le moteur.

Selon un second aspect, l'invention concerne un moteur à combustion interne comportant au moins une chambre de combustion selon le premier aspect de l'invention et un système de commande reliant un pourcentage d'ouverture d'un injecteur de carburant avec une température mesurée par ledit capteur de température de ladite chambre de combustion.

### Description sommaire des figures

La manière de réaliser l'invention, ainsi que les avantages qui en découlent, ressortiront bien de la description des modes de réalisation qui suivent, à l'appui des figures annexées dans lesquelles :
La figure 1 est une vue en coupe en perspective d'une chambre de combustion intégrant un capteur de température selon un mode de réalisation de l'invention ;
La figure 2 est une vue éclatée du capteur de température et de la chambre de mesure de la figure 1 ;
La figure 3 est une vue en coupe d'un dimensionnement du capteur de température et de la chambre de mesure de la figure 1 selon un premier mode de réalisation de l'invention ; et
La figure 4 est une vue en coupe d'un dimensionnement du capteur de température et de la chambre de mesure de la figure 1 selon un second mode de réalisation de l'invention.

### Description détaillée

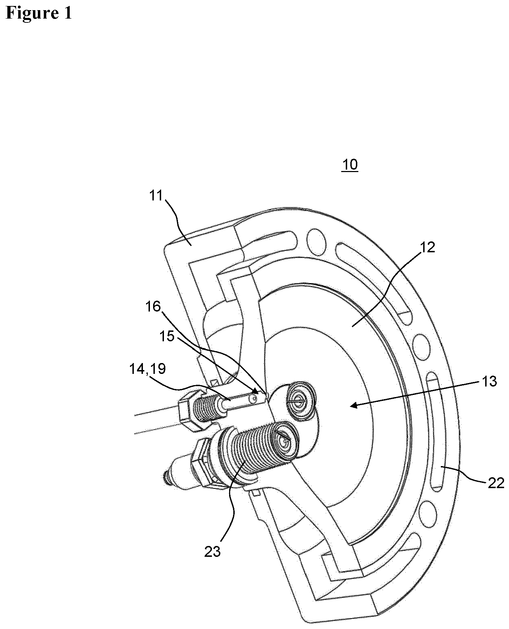

La figure 1 illustre une chambre de combustion **10** d'un moteur thermique comportant un ou plusieurs cylindres. Chaque cylindre **11** contient un piston, non représenté, mobile en translation ou en rotation dans le cylindre **11**. Pour ce faire, la partie arrière du cylindre **11** est obturée par une culasse **12** de sorte à former une chambre d'explosion **13** entre le piston et la culasse **12**. Pour entraîner le piston en translation ou en rotation dans le cylindre **11**, du carburant et de l'air sont injectés dans la chambre d'explosion **13** et une ou plusieurs bougies **23** sont commandées pour créer au moins un arc électrique et entraîner une réaction d'explosion de proche en proche dans la chambre de combustion **10**. Au sens de l'invention, la chambre d'explosion **13** concerne la partie de la chambre de combustion **10** dans laquelle le point de départ de l'explosion est formé par l'au moins un arc électrique provenant d'une ou plusieurs bougies **23**. Dans l'exemple de la figure 1, la chambre de combustion **10** comporte une culasse 12 dans laquelle deux bougies **23** sont disposées.

Selon l'invention, la culasse **12** présente également une chambre de mesures **15** intégrant un capteur de température **14**.

Le cylindre **11** présente préférentiellement des évidements **22** reliés entre eux de sorte à permettre la circulation d'un fluide caloporteur pour refroidir le cylindre **11** et la culasse **12** entre deux explosions. À cet effet, la culasse **12** prend la forme d'une assiette au centre de laquelle sont ménagés deux trous taraudés destinés à permettre le montage des deux bougies **23**. De la même manière, la chambre de mesures **15** est préférentiellement disposée proche du fond de l'assiette formant la culasse **12** car les bords de l'assiette formant la culasse **12** sont destinés à venir créer, avec le cylindre **11**, un canal étanche de circulation du fluide caloporteur sous la culasse **12** et autour des montants de la culasse **12** entourant les bougies **23**.

En formant la chambre de mesures **15** dans ce montant de la culasse **12**, le fluide caloporteur peut également refroidir la chambre de mesures **15** lors de la propagation de l'explosion dans cette chambre de mesures **15**.

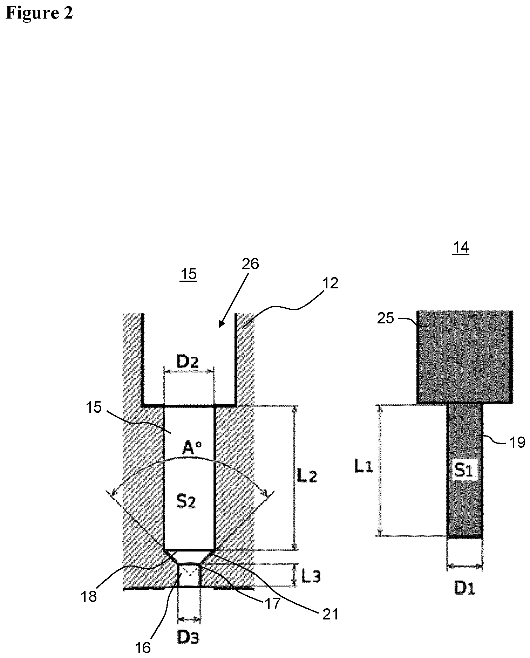

En effet, contrairement aux capteurs de température connus, le capteur de température **14** de l'invention vise à mesurer la température instantanée lors de l'explosion. Pour ce faire, l'explosion réalisée dans la chambre d'explosion **13** se propage dans la chambre de mesures **15** au moyen d'un canal **16** ménagé entre la chambre d'explosion **13** et la chambre de mesures **15**. L'explosion pénètre alors dans la chambre de mesures **15** et les dimensions de la chambre de mesures et du capteur de température **14** sont configurés de sorte que l'explosion entoure le capteur de température **14**. Tel qu'illustré sur la figure 2, le capteur de température **14** comporte préférentiellement un corps **25** permettant de visser le capteur de température **14** dans un trou taraudé **26** ménagé dans la culasse **12**. Au-dessus de ce corps **25**, le capteur de température **14** comporte une sonde **19** s'étendant linéairement dans la chambre de mesures **15**. De préférence, la sonde **19** ainsi que la chambre de mesures **15** sont cylindriques. Ainsi, la sonde **19** présente une longueur **L1** et un diamètre **D1** alors que la chambre de mesures **15** présente une longueur **L2** est un diamètre **D2**. En outre, le canal **16** est préférentiellement également cylindrique avec une longueur **L3** et un diamètre **D3**. Un épaulement est formé entre le canal **16** et la chambre de mesures **15** dans la culasse **12**.

De préférence, la chambre de mesures **15** et le canal **16** présentent une forme cylindrique et la chambre de mesures **15** possède une section supérieure **18** supérieure à la section inférieure **17** du canal **16**. Ainsi, l'épaulement **21** présent une forme trop conique avec un angle de cône **A** préférentiellement compris entre 80 et 100 degrés, par exemple 90°. Les termes supérieurs et inférieurs visent uniquement à distinguer les extrémités du canal **16** et de la chambre de mesures **15** en considérant que le canal **16** est disposé sous la chambre de mesures **15**. Bien entendu, un cylindre **11** d'un moteur peut être monté dans divers positions sans changer l'invention, ce qui peut entrainer un inversement des positions relatives entre le canal **16** et la chambre de mesures **15**.

Pour obtenir une dissipation efficace de la chaleur dans la chambre de mesures **15** tout en permettant d'obtenir une mesure particulièrement réactive par le capteur de température **14**, la sonde de mesures **19** comporte préférentiellement une longueur **L1** comprise entre trois et quatre fois le diamètre **D1** de la sonde **19**. En utilisant ce diamètre **D1** et cette longueur **L1**, il est possible de déterminer la surface **S1** de contact de la sonde **19** dans la chambre de mesures **15**. De la même manière, en connaissant la longueur **L2** de la paroi interne cylindrique de la chambre de mesures **15** ainsi que le diamètre **D2** de cette chambre de mesures **15**, il est possible de déterminer la surface **S2** interne à la chambre de mesures **15** disposée autour de la sonde **19**. De préférence, la sonde **19** est centré par rapport au cylindre formant la chambre de mesures **15**. Selon l'invention, la surface **S2** de la paroi interne de la chambre de mesures **15** est comprise entre 1,3 et 2 fois la surface **S1** de la sonde **19** dans la chambre de mesures **15**. Plus spécifiquement, la surface **S2** peut être comprise entre 1,5 et 1,6 fois la surface **S1** de la sonde **19** dans la chambre de mesures **15**. À partir de cette surface **S2**, il est possible de sélectionner le diamètre **D2** de la chambre de mesures et de calculer la longueur **S2** nécessaire pour respecter le rapport de surface de l'invention. Pour ce faire, le diamètre **D2** et préférentiellement compris entre 1,35 et 1,45 fois le diamètre **D1** de la sonde **19**. Les dimensions du canal **16** peuvent être déterminées en fonction du diamètre **D1** de la sonde **19** de sorte qu'en cas de rupture de la sonde **19**, celle-ci ne puisse pas pénétrer par le canal **16** dans la chambre d'explosion **13**. De préférence, le diamètre **D3** du canal **16** est compris entre 0,65 et 0,75 fois le diamètre **D1** de la sonde **19**. La longueur **L3** du canal **16** peut être comprise entre 0,95 et 1,05 fois le diamètre **D3** du canal **16**.

Avec ces contraintes de dimensionnement, l'invention permet d'obtenir une sonde de mesure **19** particulièrement pertinente en terme de réactivité et les dimensionnements du canal **16** et de la chambre de mesures **15** limitent les sollicitations thermiques subies par la sonde de température **19**. Il est ainsi possible d'utiliser une sonde de température avec trois thermocouples juxtaposés, noyés dans un matériau céramique et recouvert d'une chemise en Inconel^{®}.

De manière plus globale, un système de commande d'un moteur à combustion interne peut-être créé à partir de la chambre de combustion **10** de l'invention en reliant le pourcentage d'ouverture d'un injecteur de carburant avec la température mesurée à chaque explosion par le capteur de température **14** de l'invention.

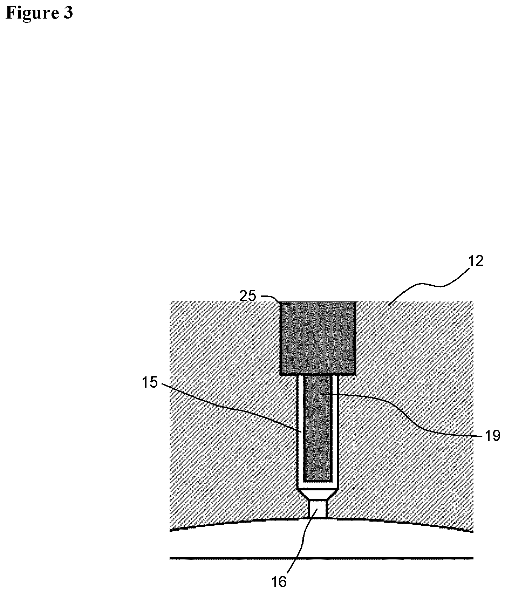

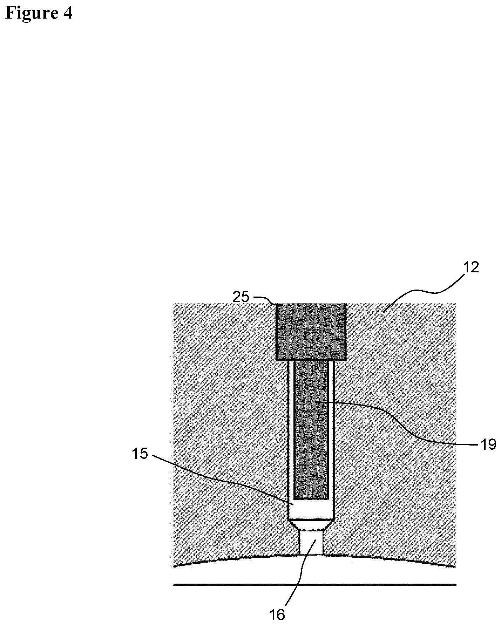

Les figures 3 et 4 illustrent deux dimensionnements distincts conformes à l'invention. Dans l'exemple de la figure 3, le diamètre **D1** de la sonde **19** est fixé à 3 mm. En utilisant un rapport de 3,83, la longueur **L1** est égale à 3 × 3,83, soit 11,50 mm. Il s'ensuit que la surface **S1** de la sonde **19** dans la chambre de mesures **15** correspond à π × 3 × 11,5, soit 108,38 mm².

À partir de cette surface **S1**, il est possible de déterminer la surface **S2** avec un rapport de 1,55, soit **S2** est égale 108,38 × 1,55, soit 167,99 mm². Le diamètre **D2** de la chambre de mesures **15** peut être déterminée à partir du diamètre **D1** avec un rapport de 1,43, soit 3 × 1,43 = 4,3 mm. En connaissant le diamètre **D2** et la surface **S2** dans la chambre de mesures **15**, il est possible de calculer la longueur **L2** de cette chambre de mesures **15** avec la relation selon laquelle **L2** est égal à S2/D2/ π, soit 12,44 mm.

Pour calculer les dimensions du canal **16**, il est possible d'appliquer un rapport de 0,66 au diamètre **D1** pour obtenir un diamètre **D3** égal à 2 mm. La longueur **L3** du canal **16** peut ensuite être équivalente au diamètre **D3** soit également 2 mm.

Ainsi, dans l'exemple de la figure 3, la sonde **19** présente un diamètre **D1** de 3 mm et une longueur **L1** de 11,5 mm alors que la chambre de mesures **15** présente un diamètre **D2** de 4,3 mm pour une longueur **L2** de 12,24 mm. En outre, le canal **16** présent un diamètre **D3** est une longueur **L3** de 2 mm.

Pour un second exemple illustré sur la figure 4, la sonde **19** présente un diamètre **D1** de 4 mm. Avec un rapport de 3,5, la longueur **L1** peut-être déterminée à 16 mm pour une surface **S1** égale à 201,06 mm². À partir de cette surface **S1** et du rapport de 1,55 entre les deux surfaces, la surface **S2** peut être déterminée à 311,64 mm². En sélectionnant un rapport de 1,35 entre les diamètres **D1** et **D2**, le diamètre **D2** de la chambre de mesures **15** peut-être sélectionnée à 5,4 mm ce qui entraîne la détermination d'une longueur **L2** de 18,37 mm.

En ce qui concerne le canal **16**, le rapport de 0,7 peut être utilisé entre le diamètre **D1** et le diamètre **D3** de sorte à obtenir un diamètre **D3** pour le canal **16** de 2,80 mm. La longueur **L3** peut également être équivalente au diamètre **D3**.

Ainsi, selon l'exemple de la figure 4, la sonde **19** peut présenter un diamètre **D1** de 4 mm pour une longueur **L1** de 16 mm alors que la chambre de mesures **15** présente un diamètre **D2** de 5,4 mm pour une longueur **L2** de 18,37 mm. En outre, le canal 16 présente un diamètre **D3** et une longueur **L3** de 2,80 mm.

## Revendications

1. Chambre de combustion (10) d'un moteur thermique comportant :
- un cylindre (11) dans lequel un piston est mobile en translation ou en rotation ;
- une culasse (12) disposée à une extrémité dudit cylindre (11); une chambre d'explosion (13) étant formée entre ledit piston et ladite culasse (12) ; et
- un capteur de température (14) de ladite chambre de combustion (10) ; ladite culasse (12) comportant une chambre de mesure (15) reliée à ladite chambre d'explosion (13) par un canal (16) dont une section inférieure (17) présente une dimension inférieure à une section supérieure (18) de ladite chambre de mesure (15) de sorte à former un épaulement (21) entre ledit canal (16) et ladite chambre de mesures (15) ;
**caractérisé en ce que** ladite chambre de mesure (15) comporte un fond (20), opposé audit canal (16), sur lequel est fixé ledit capteur de température (14) de sorte qu'une sonde (19) dudit capteur de température (14) s'étende dans ladite chambre de mesure (15) ; ladite chambre de mesure (15) présentant une paroi interne dont la surface (S2) est comprise entre 1.3 et 2 fois la surface (S1) de ladite sonde (19) dans ladite chambre de mesure (15) de sorte à former un volume libre tout autour de ladite sonde (19) dans ladite chambre de mesure (15).

2. Chambre de combustion selon la revendication 1, ***dans laquelle*** ladite surface (S2) de ladite paroi interne est comprise entre 1.5 et 1.6 fois ladite surface (S1) de ladite sonde (19) dans ladite chambre de mesure (15).

3. Chambre de combustion selon la revendication 1 ou 2, ***dans laquelle*** ladite sonde (19) présente une forme tubulaire cylindrique avec une longueur (L1) comprise entre 3 et 4 fois le diamètre (D1) de ladite sonde (19).

4. Chambre de combustion selon l'une des revendications 1 à 3, ***dans laquelle*** ladite sonde (19) et ladite chambre de mesure (15) étant cylindriques, ladite chambre de mesure (15) présente un diamètre (D2) compris entre 1.35 et 1.45 fois le diamètre (D1) de ladite sonde (19).

5. Chambre de combustion selon l'une des revendications 1 à 4, ***dans laquelle*** ladite sonde (19) et ledit canal (16) étant cylindriques, ledit canal (16) présente un diamètre (D3) compris entre 0.65 et 0.75 fois le diamètre (D1) de ladite sonde (19).

6. Chambre de combustion selon la revendication 5, ***dans laquelle*** ledit canal (16) présente une longueur (L3) comprise entre 0.95 et 1.05 fois le diamètre (D3) dudit canal (16).

7. Chambre de combustion selon l'une des revendications 1 à 6, ***dans laquelle*** ladite chambre de mesure (15) et ledit canal (16) étant cylindriques, ledit épaulement (21) présente une forme conique avec un angle (A), formé à la base du cône, compris entre 80 et 100 degrés.

8. Chambre de combustion selon l'une des revendications 1 à 7, ***dans laquelle*** ladite culasse (12) intègre un évidement (22) interne destiné à la circulation d'un liquide de refroidissement.

9. Chambre de combustion selon l'une des revendications 1 à 8, ***dans laquelle*** ladite sonde (19) intègre trois thermocouples juxtaposés.

10. Moteur à combustion interne comportant au moins une chambre de combustion (10) selon l'une des revendication 1 à 9 et un système de commande reliant un pourcentage d'ouverture d'un injecteur de carburant avec une température mesurée par ledit capteur de température (14) de ladite chambre de combustion (10).

## Patentansprüche

1. Brennkammer (10) eines Wärmekraftmotors, der enthält:
- einen Zylinder (11), in dem ein Kolben in Längs- oder in Drehrichtung beweglich ist;
- einen Zylinderkopf (12), angeordnet in einem Endstück dieses Zylinders (11); eine Explosionskammer (13), die zwischen dem erwähnten Kolben und dem erwähnten Zylinderkopf (12) gebildet ist; und
- einen Temperatursensor (14) dieser Brennkammer (10) ;
der erwähnte Zylinderkopf (12) enthält dabei eine Messkammer (15), die mit der erwähnten Explosionskammer (13) über einen Kanal (16) verbunden ist, dessen unterer Durchmesser (17) ein Maß aufweist, das kleiner ist, als ein oberer Abschnitt (18) dieser Messkammer (15), so dass eine Schulter (21) zwischen diesem Kanal (16) und dieser Messkammer (15) gebildet wird;
**dadurch gekennzeichnet, dass** diese Messkammer (15) einen Boden (20), gegenüber dem erwähnten Kanal (16), enthält, auf dem der erwähnte Temperatursensor (14) befestigt ist, so dass eine Sonde (19) dieses Temperatursensors (14) in diese Messkammer (15) reicht; diese Messkammer (15) weist eine Innenwand auf, deren Fläche (S2) zwischen dem 1.3- und 2-fachen der Fläche (S1) dieser Sonde (19) in der erwähnten Messkammer (15) beträgt, so dass ein freier Raum um diese Sonde (19) in dieser Messkammer (15) gebildet wird.

2. Brennkammer nach Anspruch 1, ***bei der*** diese Fläche (S2) der erwähnten Innenwand zwischen dem 1.5- und 1.6-fachen dieser Fläche (SI) dieser Sonde (19) in dieser Messkammer (15) beträgt.

3. Brennkammer nach Anspruch 1 oder 2, ***bei der*** diese Sonde (19) eine zylindrisch Röhrenform hat, mit einer Länge (L1) zwischen dem 3 und 4-fachen des Durchmessers (D1) dieser Sonde (19).

4. Brennkammer nach einem der Ansprüche 1 bis 3, ***bei der*** diese Sonde (19) und diese Messkammer (15) zylinderförmig sind, diese Messkammer (15) hat einen Durchmesser (D2) zwischen dem 1.35- und 1.45- fachen des Durchmessers (Dl) dieser Sonde (19).

5. Brennkammer nach einem der Ansprüche 1 bis 4, ***bei der*** diese Sonde (19) und dieser Kanal (16) zylinderförmig sind, dieser Kanal (16) hat einen Durchmesser (D3) zwischen dem 0.65- und 0.75-fachen des Durchmessers (Dl) dieser Sonde (19).

6. Brennkammer nach Anspruch 5, ***bei der*** dieser Kanal (16) eine Länge (L3) zwischen dem 0.95- und dem 1.05- fachen des Durchmessers (D3) dieses Kanals (16) aufweist.

7. Brennkammer nach einem der Ansprüche 1 bis 6, ***bei der*** diese Messkammer (15) und dieser Kanal (16) zylinderförmig sind, die erwähnte Schulter (21) hat eine konische Form, mit einem Winkel (A), gebildet an der Basis des Konus, zwischen 80 und 100 Grad.

8. Brennkammer nach einem der Ansprüche 1 bis 7, ***bei der*** dieser Zylinderkopf (12) eine innere Aussparung (22) enthält, bestimmt zur Zirkulation einer Kühlflüssigkeit.

9. Brennkammer nach einem der Ansprüche 1 bis 8, ***bei der*** diese Sonde (19) drei hintereinanderliegende Thermoelemente enthält.

10. Wärmekraftmotor mit mindestens einer Brennkammer (10) nach einem der Ansprüche 1 bis 9 und ein Steuerungssystem, das einen Öffnungsprozentsatz eines Kraftstoffeinspritzers mit einer von diesem Temperatursensor (14) der erwähnten Brennkammer (10) gemessenen Temperatur verbindet.

## Claims

1. A combustion chamber (10) of a heat engine comprising:
- a cylinder (11) wherein a piston is movable in translation or rotation;
- a cylinder head (12) arranged at one end of said cylinder (11);
- an explosion chamber (13) being formed between said piston and said cylinder head (12); and
- a temperature sensor (14) of said combustion chamber (10);
said cylinder head (12) comprising a measuring chamber (15) connected to said explosion chamber (13) by a channel (16), a lower section (17) of which has a dimension smaller than an upper section (18) of said measuring chamber (15) so as to form a shoulder (21) between said channel (16) and said measuring chamber (15);
**characterised in that** said measuring chamber (15) comprises a bottom (20), opposite said channel (16), to which said temperature sensor (14) is fixed such that a probe(19) of said temperature sensor (14) extends into said measuring chamber (15); said measuring chamber (15) having an internal wall whose surface area (S2) is in the range from 1.3 to 2 times the surface area (S1) of said probe (19) in said measuring chamber (15) so as to form a free volume all-around said probe (19) in said measuring chamber (15).

2. Combustion chamber according to claim 1, ***wherein*** said surface (S2) of said internal wall is in the range from 1.5 to 1.6 times said surface (S1) of said probe (19) in said measuring chamber (15).

3. Combustion chamber according to claim 1 or 2, ***wherein*** said probe (19) has a cylindrical tubular shape with a length (L1) in the range from 3 to 4 times the diameter (D1) of said probe (19).

4. Combustion chamber according to anyone of claims 1 to 3, ***wherein*** said probe (19) and said measurement chamber (15) being cylindrical, said measurement chamber (15) has a diameter (D2) in the range from 1.35 to 1.45 times the diameter (D1) of said probe (19).

5. Combustion chamber according to anyone of Claims 1 to 4, ***wherein*** said probe (19) and the said channel (16) being cylindrical, said channel (16) has a diameter (D3) in the range from 0.65 to 0.75 times the diameter (D1) of said probe (19).

6. Combustion chamber according to claim 5, ***wherein*** said channel (16) has a length (L3) in the range from 0.95 to 1.05 times the diameter (D3) of said channel (16).

7. Combustion chamber according to anyone of claims 1 to 6, ***wherein*** said measuring chamber (15) and said channel (16) being cylindrical, said shoulder (21) has a conical shape with an angle (A), formed at the base of the cone, in the range from 80 to 100 degrees.

8. Combustion chamber according to anyone of claims 1 to 7, ***wherein*** said cylinder head (12) incorporates an internal recess (22) for the circulation of a cooling liquid.

9. Combustion chamber according to anyone of claims 1 to 8, ***wherein*** said probe (19) incorporates three juxtaposed thermocouples.

10. Internal combustion engine comprising at least one combustion chamber (10) according to anyone of claims 1 to 9 and a control system connecting a percentage of opening of a fuel injector with a temperature measured by said temperature sensor (14) of said combustion chamber (10).
